(19) Europäisches Patentamt / European Patent Office / Office européen des brevets

(11) EP 1 274 574 B1

(12) # EUROPÄISCHE PATENTSCHRIFT

(45) Veröffentlichungstag und Bekanntmachung des Hinweises auf die Patenterteilung:
**22.10.2008 Patentblatt 2008/43**

(21) Anmeldenummer: **01900408.4**

(22) Anmeldetag: **10.01.2001**

(51) Int Cl.:
***B32B 27/36*** *(2006.01)* ***B32B 27/18*** *(2006.01)*

(86) Internationale Anmeldenummer:
**PCT/EP2001/000207**

(87) Internationale Veröffentlichungsnummer:
**WO 2001/060612 (23.08.2001 Gazette 2001/34)**

(54) **TRANSPARENTE, SIEGELFÄHIGE, UV-STABILISERTE UND FLAMMHEMMEND AUSGERÜSTETE POLYESTERFOLIE, VERFAHREN ZU IHRER HERSTELLUNG UND IHRE VERWENDUNG**

TRANSPARENT, SEALABLE, FLAME-RETARDANT POLYESTER FILM, METHOD FOR THE PRODUCTION AND USE THEREOF

FEUILLE DE POLYESTER TRANSPARENTE, SCELLABLE, TRAITEE POUR RETARDER LA COMBUSTION ET STABILISEE AUX UV, SON PROCEDE DE FABRICATION ET SON UTILISATION

(84) Benannte Vertragsstaaten:
**DE FR GB LU**

(30) Priorität: **19.02.2000 DE 10007726**

(43) Veröffentlichungstag der Anmeldung:
**15.01.2003 Patentblatt 2003/03**

(73) Patentinhaber: **Mitsubishi Polyester Film GmbH**
**65203 Wiesbaden (DE)**

(72) Erfinder:
- **MURSCHALL, Ursula**
  **55283 Nierstein (DE)**
- **KERN, Ulrich**
  **55218 Ingelheim (DE)**
- **STOPP, Andreas**
  **55218 Ingelheim (DE)**
- **CRASS, Günther**
  **65232 Taunusstein (DE)**
- **PEIFFER, Herbert**
  **55126 Mainz (DE)**

(74) Vertreter: **Schweitzer, Klaus et al**
**Plate Schweitzer Zounek**
**Patentanwälte**
**Rheingaustrasse 196**
**65203 Wiesbaden (DE)**

(56) Entgegenhaltungen:
**EP-A- 0 035 835**
**EP-A- 0 306 675**
**EP-A- 0 515 096**
**EP-A- 0 785 067**
**WO-A-98/06575**

EP 1 274 574 B1

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

## Beschreibung

Die Erfindung betrifft eine transparente, UV-stabilisierte und flammhemmend ausgerüstete, siegelfähige, biaxial orientierte Polyesterfolie bestehend aus mindestens einer Basisschicht B und beidseitig auf dieser Basisschicht aufgebrachten Deckschichten A und C. Die Folie enthält zusätzlich mindestens einen UV-Stabilisator als Lichtschutzmittel und mindestens ein Flammschutzmittel. Die Erfindung betrifft weiterhin ein Verfahren für die Herstellung der Folie und ihre Verwendung.

Die Folien eignen sich insbesondere für Außenanwendungen, wie z.B. für Gewächshäuser, Überdachungen. Weiterhin eignen sich die Folien sehr gut für die Abdeckung und somit zum Schutz von metallischen Oberflächen, auf die die Folien heißgesiegelt werden können. Bei Außenanwendungen zeigen Folien, die keine UV absorbierenden Materialien enthalten bereits nach kurzer Zeit eine Vergilbung und eine Verschlechterung der mechanischen Eigenschaften infolge eines photooxidativen Abbaus durch das Sonnenlicht. Darüber hinaus eignen sich die Folien und daraus hergestellte Artikel insbesondere für Anwendungen, bei denen ein Brandschutz bzw. eine Schwerentflammbarkeit gefordert ist.

Siegelfähige, biaxial orientierte Polyesterfolien sind nach dem Stand der Technik bekannt. Ebenfalls bekannt sind siegelfähige, biaxial orientierte Polyesterfolien, die mit einem oder mit mehreren UV-Absorbern ausgerüstet sind. Diese nach dem Stand der Technik bekannten Folien zeichnen sich entweder durch ein gutes Siegelverhalten, eine gute Optik oder durch ein akzeptables Verarbeitungsverhalten aus.

In der GB-A 1 465 973 wird eine koextrudierte, zweischichtige Polyesterfolie beschrieben, deren eine Schicht aus isophthalsäurehaltigen und terephthalsäurehaltigen Copolyestern und deren andere Schicht aus Polyethylenterephthalat besteht. Über das Siegelverhalten der Folie finden sich keine verwertbaren Angaben. Wegen fehlender Pigmentierung ist die Folie nicht prozeßsicher herstellbar, d.h. nicht wickelbar und nur unter Einschränkung weiterverarbeitbar.

In der EP-A 0 035 835 wird eine koextrudierte siegelfähige Polyesterfolie beschrieben, die zur Verbesserung des Wickel- und des Verarbeitungsverhaltens in der Siegelschicht Partikel enthält, deren mittlere Teilchengröße die Schichtdicke der Siegelschicht übersteigt. Durch die teilchenförmigen Zusatzstoffe werden Oberflächenvorsprünge gebildet, die das unerwünschte Blocken und Kleben der Folie an Walzen oder Führungen verhindern. Über die andere, nicht siegelfähige Schicht der Folie, werden keine näheren Angaben zur Einarbeitung von Antiblockmitteln gemacht. Es bleibt offen, ob diese Schicht Antiblockmittel enthält. Durch die Wahl von Partikeln mit größerem Durchmesser als die Dicke der Siegelschicht und bei den in den Beispielen angebenen Konzentrationen wird das Siegelverhalten der Folie verschlechtert. Angaben zum Siegeltemperaturbereich der Folie werden nicht gemacht. Die Siegelnahtfestigkeit wird bei 140 °C gemessen und liegt in einem Bereich von 63 bis 120 N/m (0,97 N/15 mm bis 1,8 N/15 mm Folienbreite).

In der EP-A 0 432 886 wird eine koextrudierte mehrschichtige Polyesterfolie beschrieben, die eine erste Oberfläche besitzt, auf der eine siegelfähige Schicht angeordnet ist und die eine zweite Oberfläche besitzt, auf der eine Acrylatschicht angeordnet ist. Die siegelfähige Deckschicht kann auch hier aus isophthalsäurehaltigen und terephthalsäurehaltigen Copolyestern bestehen. Durch die rückseitige Beschichtung erhält die Folie ein verbessertes Verarbeitungsverhalten. Angaben zum Siegeltemperaturbereich der Folie werden nicht gemacht. Die Siegelnahtfestigkeit wird bei 140 °C gemessen. Für eine 11 μm dicke Siegelschicht wird eine Siegelnahtfestigkeit von 761,5 N/m (11,4 N/15 mm) angegeben. Nachteilig an der rückseitigen Acrylatbeschichtung ist, daß diese Seite gegen die siegelfähige Deckschicht nicht mehr siegelt. Die Folie ist damit nur sehr eingeschränkt zu verwenden.

In der EP-A 0 515 096 wird eine koextrudierte, mehrschichtige siegelfähige Polyesterfolie beschrieben, die auf der siegelfähigen Schicht ein zusätzliches Additiv enthält. Das Additiv kann z.B. anorganische Partikel enthalten und wird vorzugsweise in einer wässrigen Schicht an die Folie bei deren Herstellung angetragen. Hierdurch soll die Folie die guten Siegeleigenschaften beibehalten und gut zu verarbeiten sein. Die Rückseite enthält nur sehr wenige Partikel, die hauptsächlich über das Regranulat in diese Schicht gelangen. Angaben zum Siegeltemperaturbereich der Folie werden auch in dieser Schrift nicht gemacht. Die Siegelnahtfestigkeit wird bei 140 °C gemessen und beträgt mehr als 200 N/m (3 N/15 mm). Für eine 3 μm dicke Siegelschicht wird eine Siegelnahtfestigkeit von 275 N/m (4,125 N/15 mm) angegeben.

In der WO 98/06575 wird eine koextrudierte mehrschichtige Polyesterfolie beschrieben, die eine siegelfähige Deckschicht und eine nicht siegelfähige Basisschicht enthält. Die Basisschicht kann dabei aus einer oder mehreren Schichten aufgebaut sein, wobei die innere der Schichten mit der siegelfähigen Schicht in Kontakt ist. Die andere (äußere) Schicht bildet dann die zweite nicht siegelfähige Deckschicht. Die siegelfähige Deckschicht kann auch hier aus isophthalsäurehaltigen und terephthalsäurehaltigen Copolyestern bestehen, die jedoch keine Antiblockteilchen enthalten. Die Folie enthält außerdem noch mindestens einen UV-Absorber, der der Basisschicht in einem Gewichtsverhältnis von 0,1 bis 10 % zugegeben wird. Als UV Absorber werden dabei vorzugsweise Triazine, z. B. ® Tinuvin 1577 der Fa. Ciba verwendet. Die Basisschicht ist mit üblichen Antiblockmitteln ausgestattet. Die Folie zeichnet sich durch eine gute Siegelfähigkeit aus, hat jedoch nicht das gewünschte Verarbeitungsverhalten und weist zudem Defizite in den optischen Eigenschaften, wie Glanz und Trübung, auf.

In der DE-A 23 46 787 ist ein schwerentflammbarer Rohstoff beschrieben. Neben dem Rohstoff ist auch die Verwendung des Rohstoffs zur Herstellung von Folien und Fasern beschrieben. Beim Einsatz dieses phospholanmodifizierten Rohstoffs bei der Folienherstellung zeigen sich folgende Defizite

- Der genannte Rohstoff ist hydrolyseempfindlich und muß sehr gut vorgetrocknet werden. Beim Trocknen des Rohstoffes mit Trocknern, die dem Stand der Technik entsprechen, verklebt der Rohstoff, so daß nur unter schwierigsten Bedingungen eine Folie herstellbar ist.
- Die so unter unwirtschaftlichen Bedingungen hergestellten Folien verspröden bei Temperaturbelastungen, d.h. die mechanischen Eigenschaften verschlechtern sich aufgrund der Versprödung, so daß die Folie unbrauchbar ist. Bereits nach 48 Stunden Temperaturbelastung tritt diese Versprödung auf.

Aufgabe der vorliegenden Erfindung war es, eine transparente, UV-stabilisierte, flammhemmend ausgerüstete, siegelfähige und biaxial orientierte Polyesterfolie bereitzustellen, die die Nachteile der genannten Folien nach dem Stand der Technik nicht aufweist und sich insbesondere durch die Kombination vorteilhafter Eigenschaften wie eine sehr gute Siegelfähigkeit, eine wirtschaftliche Herstellung, eine verbesserte Verarbeitbarkeit und verbesserte optische Eigenschaften auszeichnet.

Es war Aufgabe der vorliegenden Erfindung, den Siegeltemperaturbereich der Folie auf niedrige Temperaturen zu erweitern, die Siegelnahtfestigkeit der Folie zu erhöhen und gleichzeitig für ein besseres Handling der Folie zu sorgen als es nach dem Stand der Technik bekannt ist. Außerdem sollte gewährleistet sein, daß die Folie auch auf schnelllaufenden Verarbeitungsmaschinen verarbeitet werden kann. Bei der Herstellung der Folie sollte immanent anfallendes Regenerat in einer Konzentration bis zu 60 Gew.-%, bezogen auf das Gesamtgewicht der Folie, der Extrusion zugeführt werden können, ohne daß dabei die physikalischen Eigenschaften der Folie nennenswert negativ beeinflußt werden.

Da die Folie insbesondere für die Außenanwendung und/oder kritische Innenanwendungen gedacht ist, sollte sie eine hohe UV-Stabilität aufweisen. Eine hohe UV-Stabilität bedeutet, daß die Folien durch Sonnenlicht oder andere UV-Strahlung nicht oder nur extrem wenig geschädigt werden. Insbesondere sollen die Folien bei mehrjähriger Außenanwendung nicht vergilben, keine Versprödung oder Rißbildung an der Oberfläche zeigen und auch keine Verschlechterung der mechanischen Eigenschaften aufweisen. Hohe UV-Stabilität bedeutet, daß die Folie das UV-Licht absorbiert und Licht erst im sichtbaren Bereich durchläßt.

Eine flammhemmende Wirkung bedeutet, daß die transparente Folie in einer sogenannten Brandschutzprüfung die Bedingungen nach DIN 4102 Teil 2 und insbesondere die Bedingungen nach DIN 4102 Teil 1 erfüllt und in die Baustoffklassen B 2 und insbesondere B 1 der schwer entflammbaren Stoffe eingeordnet werden kann.

Desweiteren soll die Folie den UL-Test 94 (Vertical Buming Test for Flammability of Plastic Material) bestehen, so daß sie in die Klasse 94 VTM-0 eingestuft werden kann. Das bedeutet, daß die Folie 10 Sekunden nach Wegnahme des Bunsenbrenners nicht mehr brennt, nach 30 Sekunden kein Glühen beobachtet wird und auch kein Abtropfen festgestellt wird.

Zu der wirtschaftlichen Herstellung zählt, daß die Rohstoffe bzw. die Rohstoffkomponenten, die zur Herstellung der schwer entflammbaren Folie benötigt werden, mit Industrietrocknern, die dem Standard der Technik genügen, getrocknet werden können. Wesentlich ist, daß die Rohstoffe nicht verkleben und nicht thermisch abgebaut werden. Zu diesen Industrietrocknem nach dem Stand der Technik zählen Vakuumtrockner, Wirbelschichttrockner, Fließbetttrockner und Festbetttrockner (Schachttrockner).

Diese Trockner arbeiten bei Temperaturen zwischen 100 und 170 °C, bei denen die im Stand der Technik erwähnten flammhemmend ausgerüsteten Rohstoffe verkleben, so daß keine Folienherstellung möglich ist.

Bei dem am schonendsten trocknenden Vakuumtrockner durchläuft der Folien-Rohstoff einen Temperaturbereich von ca. 30°C bis 130°C bei einem Vakuum von 50 mbar. Danach ist ein sog. Nachtrocknen in einem Hopper bei Temperaturen von 100 - 130°C und einer Verweilzeit von 3 bis 6 Stunden erforderlich. Selbst hier verklebt der genannte Rohstoff extrem.

Keine Versprödungen bei Temperaturbelastung bedeutet, daß die Folie nach 100 Stunden Tempervorgang bei 100 °C in einem Umluftofen keine Versprödung und keine nachteiligen mechanischen Eigenschaften aufweist.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Die Aufgabe wird erfindungsgemäß durch die Bereitstellung einer flammhemmend ausgerüsteten, UV stabilisierten, biaxial orientierten, siegelfähigen Polyesterfolie mit mindestens einer Basisschicht B, einer siegelfähigen Deckschicht A und einer weiteren, auf der anderen Seite der Basisschicht B befindlichen, Deckschicht C gelöst, wobei die siegelfähige Deckschicht A bevorzugt eine Siegelanspringtemperatur von kleiner 110 °C und bevorzugt eine Siegelnahtfestigkeit von mindestens 1,3 N/15 mm aufweist, und wobei die Folie mindestens einen UV-Absorber oder Mischungen verschiedener UV-Absorber und mindestens ein Flammschutzmittel oder Mischungen verschiedener Flammschutzmittel enthält. Die Konzentration an Antiblockmittel in der Basisschicht B beträgt 0 - 0,15 Gew.-%, in der Deckschicht C 0,1 - 1 Gew.-% und in der Deckschicht A 0,01 - 0,2 Gew.-%, und der mittlere Partikeldurchmesser der Antiblockmittel

ist kleiner als 100 nm und größer als 1 μm.

Der UV-Stabilisator wird zweckmäßigerweise als Masterbatch bei der Folienherstellung direkt zudosiert, wobei die Konzentration des UV-Stabilisators vorzugsweise zwischen 0,01 Gew.-% und 5 Gew.-%, bezogen auf das Gewicht der den UV-Absorber enthaltenden Schichten, liegt.

Das in der erfindungsgemäßen Folie enthaltene Flammschutzmittel, wird bevorzugt über die sogenannte Masterbatch-Technologie direkt bei der Folienherstellung zudosiert, wobei die Konzentration des Flammschutzmittels zwischen 0,5 und 30 Gew.-%, vorzugsweise zwischen 1 und 20 Gew.-%, bezogen auf das Gewicht der das Flammschutzmittel enthaltenden Schichten, liegt.

Erfindungsgemäß ist die Folie bevorzugt dreischichtig und umfaßt dann als Schichten die Basisschicht B, die siegelfähige Deckschicht A und die nicht siegelfähige Deckschicht C. Die erfindungsgemäße Folie kann zusätzliche Zwischenschichten aufweisen.

Die Basisschicht B der Folie besteht aus Polyethylenterephthalat.

Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, $-C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphtalindicarbonsäuren (beispielsweise Naphthalin-1,4- oder 1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x, x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung dieser erfindungsgemäßen Polyester kann z.B. nach dem Umesterungsverfahren erfolgen. Dabei geht man von Dicarbonsäureestern und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus (W. Eberhard, S. Janocha, M.J. Hopper, K. J. Mackenzie, "Polyester Films", in Encyclopaedia of polymer science & engineering volume 12, 2, 193-216 (1988), John Wiles & Sons).

Die durch Koextrusion auf die Basisschicht B aufgebrachte siegelfähige Deckschicht A ist auf Basis von Polyestercopolymeren aufgebaut und besteht im wesentlichen aus Copolyestern, die überwiegend aus Isophthalsäure- und Terephthalsäure-Einheiten und aus Ethylenglykol-Einheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester sind solche, die aus Ethylenterephthalat- und Ethylenisophthalat-Einheiten aufgebaut sind. Der Anteil an Ethylenterephthalat beträgt bevorzugt 40 bis 95 Mol-% und der entsprechende Anteil an Ethylenisophthalat 60 bis 5 Mol-%. Insbesondere bevorzugt sind Copolyester, bei denen der Anteil an Ethylenterephthalat 50 bis 90 Mol-% und der entsprechende Anteil an Ethylenisophthalat 50 bis 10 Mol-% beträgt und ganz besonders bevorzugt sind Copolyester, bei denen der Anteil an Ethylenterephthalat 60 bis 85 Mol-% und der entsprechende Anteil an Ethylenisophthalat 40 bis 15 Mol-% beträgt.

Für die andere, nicht siegelfähige Deckschicht C oder für eventuell vorhandene Zwischenschichten können prinzipiell die gleichen Polymere verwendet werden, wie sie zuvor für die Basisschicht B beschrieben wurden.

Die gewünschten Siegel- und die gewünschten Verarbeitungseigenschaften der erfindungsgemäßen Folie werden aus der Kombination der Eigenschaften des verwendeten Copolyesters für die siegelfähige Deckschicht und den Topographien der siegelfähigen Deckschicht A und der nicht siegelfähigen Deckschicht C erhalten.

Die Siegelanspringtemperatur von bevorzugt kleiner 110 °C und die Siegelnahtfestigkeit von bevorzugt mindestens 1,3 N/15mm werden erreicht, wenn für die siegelfähige Deckschicht A die oben näher beschriebenen Copolymere verwendet werden. Die besten Siegeleigenschaften der Folie erhält man, wenn dem Copolymeren keine weiteren Additive, insbesondere keine anorganischen oder organischen Filler zugegeben werden. Für diesen Fall erhält man bei vorgegebenem Copolyester die niedrigste Siegelanspringtemperatur und die höchsten Siegelnahtfestigkeiten. Allerdings ist in diesem Fall das Handling der Folie schlechter, da die Oberfläche der siegelfähigen Deckschicht A zum Verblocken neigt. Die Folie läßt sich kaum wickeln und ist für eine Weiterverarbeitung auf schnellaufenden Verpackungsmaschinen kaum geeignet. Zur Verbesserung des Handlings der Folie und der Verarbeitbarkeit ist es notwendig, die siegelfähige Deckschicht A zu modifizieren. Dies geschieht am besten mit Hilfe von geeigneten Antiblockmitteln einer ausgewählten Größe, die in einer bestimmten Konzentration der Siegelschicht zugegeben werden und zwar derart, daß einerseits das Verblocken minimiert und andererseits die Siegeleigenschaften nur unwesentlich verschlechtert werden. Diese gewünschte Eigenschaftskombination läßt sich insbesondere dann erreichen, wenn die Topographie der siegelfähigen Deckschicht A durch den folgenden Satz von Parametern gekennzeichnet ist:

- Die Rauhigkeit der siegelfähigen Deckschicht, gekennzeichnet durch den $R_a$-Wert, sollte kleiner als 30 nm sein. Im anderen Fall werden die Siegeleigenschaften im Sinne der vorliegenden Erfindung negativ beeinflußt.
- Der Messwert der Gasströmung sollte im Bereich von 500-4000 s liegen. Bei Werten unterhalb von 500 s werden die Siegeleigenschaften im Sinne der vorliegenden Erfindung negativ beeinflußt und bei Werten oberhalb von 4000 s wird das Handling der Folie schlecht.

Um das Verarbeitungsverhalten der siegelfähigen Folie weiterhin zu verbessern, sollte die Topographie der nicht siegelfähigen Deckschicht C durch den folgenden Satz von Parametern gekennzeichnet sein:

- Der Reibungskoeffizient (COF) dieser Seite gegen sich selbst sollte kleiner als 0,5 sein. Andernfalls ist das Wickelverhalten und die Weiterverarbeitung der Folie unbefriedigend.
- Die Rauhigkeit der nicht siegelfähigen Deckschicht, gekennzeichnet durch den $R_a$-Wert, sollte größer als 40 nm und kleiner als 100 nm sein. Kleinere Werte als 40 nm haben negative Auswirkungen auf das Wickel- und Verarbeitungsverhalten der Folie und größerer Werte als 100 nm beeinträchtigen die optischen Eigenschaften (Glanz, Trübung) der Folie.
- Der Messwert der Gasströmung sollte im Bereich unterhalb von 120 s liegen. Bei Werten oberhalb von 120 s wird das Wickel- und das Verarbeitungsverhalten der Folie negativ beeinflußt.
- Die Anzahl der Erhebungen N pro $mm^2$ Folienoberfläche ist mit der jeweiligen Höhe h über die folgende Gleichung korreliert:

$$0{,}29 - 3{,}30 * \log h/\mu m < \log N/mm^2 < 1{,}84 - 2{,}70 * \log h/\mu m$$

$$0{,}01\ \mu m < h < 10\ \mu m$$

Sind die Werte für N kleiner als es der linken Seite der Gleichung entspricht, so wird das Wickel- und das Verarbeitungsverhalten der Folie negativ beeinflußt, sind die Werte für N größer als es der rechten Seite der Gleichung entspricht, so werden der Glanz und die Trübung der Folie negativ beeinflußt.

Zur UV-Stabilisierung der erfindungsgemäßen Folie können grundsätzlich sämtliche organische und anorganische UV Stabilisatoren, die für die Einarbeitung in Polyestern geeignet sind, ausgewählt werden. Solche geeignete UV-Stabilisatoren sind nach dem Stand der Technik bekannt und z.B. in WO 98/06575, in EP-A-0 006 686, in EP-A-0 031 202, EP-A-0 031 203 oder in der EP-A-0 076 582 näher beschrieben.

Licht, insbesondere der ultraviolette Anteil der Sonnenstrahlung, d. h. der Wellenlängenbereich von 280 bis 400 nm, leitet bei Thermoplasten Abbauvorgänge ein, als deren Folge sich nicht nur das visuelle Erscheinungsbild infolge von Farbänderung bzw. Vergilbung ändert, sondern auch die mechanisch-physikalischen Eigenschaften negativ beeinflußt werden.

Die Inhibierung dieser photooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind.

Polyethylenterephthalate beginnen beispielsweise schon unterhalb von 360 nm UV-Licht zu absorbieren, ihre Absorption nimmt unterhalb von 320 nm beträchtlich zu und ist unterhalb von 300 nm sehr ausgeprägt. Die maximale Absorption liegt zwischen 280 und 300 nm.

In Gegenwart von Sauerstoff werden hauptsächlich Kettenspaltungen, jedoch keine Vernetzungen beobachtet. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben.

Die Photooxidation von Polyethylenterephthalaten kann auch über Wasserstoffabspaltung in $\alpha$-Stellung der Estergruppen zu Hydroperoxiden und deren Zersetzungsprodukten sowie zu damit verbundenen Kettenspaltungen führen (H. Day, D. M. Wiles: J. Appl. Polym. Sci 16, 1972, Seite 203).

UV-Stabilisatoren bzw. UV-Absorber als Lichtschutzmittel sind chemische Verbindungen, die in die physikalischen und chemischen Prozesse des lichtinduzierten Abbaus eingreifen können. Ruß und andere Pigmente können teilweise einen Lichtschutz bewirken. Diese Substanzen sind jedoch für transparente Folien ungeeignet, da sie zur Verfärbung oder Farbänderung führen. Für transparente, matte Folien sind nur organische und metallorganische Verbindungen geeignet, die dem zu stabilisierenden Thermoplasten keine oder nur eine extrem geringe Farbe oder Farbänderung verleihen, d. h. die in dem Thermoplasten löslich sind.

Im Sinne der vorliegenden Erfindung geeignete UV-Stabilisatoren als Lichtschutzmittel sind UV-Stabilisatoren, die mindestens 70 %, vorzugsweise 80 %, besonders bevorzugt 90%, des UV-Lichtes im Wellenlängenbereich von 180 nm bis 380 nm, vorzugsweise 280 bis 350 nm absorbieren. Diese sind insbesondere geeignet, wenn sie im Temperaturbereich von 260 bis 300 °C thermisch stabil sind, d. h. sich nicht zersetzen und nicht zur Ausgasung führen. Geeignete UV-Stabilisatoren als Lichtschutzmittel sind beispielsweise 2-Hydroxybenzophenone, 2-Hydroxybenzotriazole, nickelorganische Verbindungen, Salicylsäureester, Zimtsäureester-Derivate, Resorcinmonobenzoate, Oxalsäureanilide, Hydroxybenzoesäureester, sterisch gehinderte Amine und Triazine, wobei die 2-Hydroxybenzotriazole und die Triazine bevorzugt sind.

In einer ganz besonders bevorzugten Ausführungsform enthält die erfindungsgemäße Folie 0,01 Gew.-% bis 5,0 Gew.-% 2-(4,6-Diphenyl-1,3,5-triazin-2-yl)-5-(hexyl)oxy-phenol der Formel

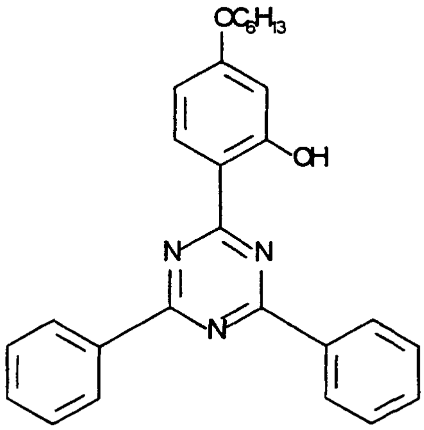

oder 0,01 Gew.-% bis 5,0 Gew.-% 2,2-Methylen-bis(6-(2H-benzotriazol-2-yl)-4-(1,1,2,2-tetramethylpropyl)-phenol der Formel

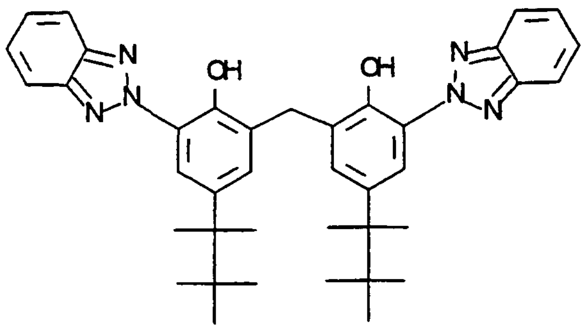

In einer bevorzugten Ausführungsform können auch Mischungen dieser beiden UV-Stabilisatoren oder Mischungen von mindestens einem dieser beiden UV-Stabilisatoren mit anderen UV-Stabilisatoren eingesetzt werden, wobei die Gesamtkonzentration an Lichtschutzmittel vorzugsweise zwischen 0,01 Gew.-% und 5,0 Gew.-%, bezogen auf das Gewicht an kristallisierbarem Polyethylenterephthalat, liegt.

In der dreischichtigen Ausführungsform ist der UV-Stabilisator vorzugsweise in der nicht siegelfähigen Deckschicht C enthalten. Jedoch können nach Bedarf auch die Basisschicht B und/oder auch die siegelfähige Deckschicht A und/oder gegebenenfalls vorhandene Zwischenschichten mit UV-Stabilisatoren ausgerüstet sein. Die Konzentration des oder der Stabilisatoren bezieht sich dabei auf das Gewicht der Schichten, die mit UV-Stabilisatoren ausgerüstet sind.

Überraschender Weise haben Bewitterungsversuche nach der Testspezifikation ISO 4892 mit dem Atlas Cl65 Weather Ometer gezeigt, daß es im Falle der vorgenannten dreischichtigen Folie durchaus ausreichend ist, die bevorzugt 0,3 µm bis 2,5 µm dicken Deckschichten mit UV-Stabilisatoren auszurüsten, um eine verbesserte UV-Stabilität zu

erreichen.

Bewitterungstests haben ferner ergeben, daß die erfindungsgemäß UV-stabilisierten Folien selbst bei Bewitterungstests nach hochgerechnet 5 bis 7 Jahren Außenanwendung im allgemeinen keine Vergilbung, keine Versprödung, keinen Glanzverlust der Oberfläche, keine Rißbildung an der Oberfläche und keine Verschlechterung der mechanischen Eigenschaften aufweisen.

Das Lichtschutzmittel kann zweckmäßigerweise bereits beim Thermoplast-Rohstoffhersteller zudosiert werden oder bei der Folienherstellung in den Extruder dosiert werden.

Besonders bevorzugt ist die Zugabe des Lichtschutzmittels über die Materbatch-Technologie. Das Lichtschutzmittel wird in einem festen Trägermaterial dispergiert. Als Trägermaterial kommen der verwendete Polyester selbst oder auch andere Polymere, die diesem ausreichend verträglich sind, in Frage.

Wichtig bei der Masterbatch-Technologie ist, daß die Korngröße und das Schüttgewicht des Masterbatches ähnlich der Korngröße und dem Schüttgewicht des Polyesters ist, so daß eine homogene Verteilung und damit eine homogene UV-Stabilisierung erfolgen kann.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingehalten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Desweiteren ist die geringe Lichtbeständigkeit einer damit ausgerüsteten Folie neben der Entwicklung von Halogenwasserstoffen im Brandfall extrem nachteilig.

Geeignete Flammschutzmittel, die gemäß der Erfindung eingesetzt werden, sind beispielsweise organische Phosphorverbindungen wie Carboxyphosphinsäuren, deren Anhydride und Dimethyl-methylphosphonat. Erfindungswesentlich ist, daß die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali-/Erdalkalistearate und/oder Alkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl-Tetrakis-3-(3,5-di-Tertiärbutyl-4-Hydroxyphenyl)-Propionat oder 1,3,5-Trimethyl-2,4,6-tris (3,5-di-Tertärbutyl-4-Hydroxybenzyl)benzol sind besonders vorteilhaft. Es können auch Mischungen dieser Hydrolysestabilisatoren verwendet werden.

Es war es überraschend, daß mittels Masterbatch-Technologie, einer geeigneten Vortrocknung und/oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und daß die Folie nach Temperaturbelastung nicht versprödet und beim Knicken nicht bricht.

Es war überraschend, daß

- der Gelbwert der Folie im Vergleich zu einer nicht ausgerüsteten Folie im Rahmen der Meßgenauigkeit nicht negativ beeinflußt ist,
- bei der Folienherstellung keine Ausgasungen, keine Düsenablagerungen, keine Rahmenausdampfungen auftreten, wodurch die Folie eine exzellente Optik aufweist und ein ausgezeichnetes Profil und eine hervorragende Planlage hat,
- sich die schwerentflammbare Folie durch einen hervorragende Streckbarkeit auszeichnet, so daß sie verfahrenssicher und stabil auf high speed film lines bis zu Geschwindigkeiten von 420m/min produktionssicher hergestellt werden kann.

Damit ist eine solche Folie auch wirtschaftlich rentabel.

Desweiteren ist hervorzuheben, daß auch das Regenerat wieder einsetzbar ist, ohne den Gelbwert der Folie negativ zu beeinflussen.

In der dreischichtigen Ausführungsform ist das Flammschutzmittel vorzugsweise in der nicht siegelfähigen Deckschicht C enthalten. Jedoch können nach Bedarf auch die Basisschicht B und/oder auch die siegelfähige Deckschicht A und gegebenenfalls vorhandene Zwischenschichten mit Flammschutzmitteln ausgerüstet sein.

Brandschutzversuche nach DIN 4102 und dem UL-Test haben gezeigt, daß es im Falle einer dreischichtigen Folie durchaus ausreichend ist, die bevorzugt 0,3 bis 2,5 μm dicken Deckschichten mit Flammschutzmittel auszurüsten, um eine ausreichende Flammhemmung zu erreichen.

Dadurch werden die mit der bekannten Koextrusionstechnologie hergestellten schwer entflammbaren, mehrschichtigen Folien im Vergleich zu den komplett in hohen Konzentrationen ausgerüsteten Monofolien wirtschaftlich interessant, da deutlich weniger Flammschutzmittel benötigt wird.

Bei der Herstellung der Folie wurde festgestellt, daß sich bevorzugt mittels Masterbatch-Technologie, einer geeigneten Vortrocknung bzw. Vorkristallisation des Masterbatches und durch Einsatz von geringen Konzentrationen an Hydrolysestabilisator die schwer entflammbare Folie ohne Verklebung im Trockner herstellen läßt. Desweiteren wurden keine Ausgasungen und Ablagerungen im Produktionsprozeß gefunden.

Darüber hinaus ergaben Messungen, daß die erfindungsgemäße Folie bei Temperaturbelastungen von 100 °C über einen längeren Zeitraum nicht versprödet, was überraschend ist. Dieses Resultat kann auf die synergistische Wirkung von geeigneter Vorkristallisation, Vortrocknung, Masterbatch-Technologie und Hydrolysestabilisator zurückgeführt werden.

Desweiteren ist die erfindungsgemäße Folie ohne Umweltbelastung und ohne Verlust der mechanischen Eigenschaften problemlos rezyklierbar, wodurch sie sich beispielsweise für die Verwendung als kurzlebige Werbeschilder, beim Messebau und für andere Werbeartikel, wo Brandschutz gewünscht wird, geeignet.

Überraschenderweise erfüllen schon erfindungsgemäße Folien im Dickenbereich 5 - 300 μm die Anforderungen der Baustoffklassen B2 und B1 nach DIN 4102 und dem UL-Test 94.

Erfindungsgemäß wird das Flammschutzmittel bevorzugt über die Masterbatch-Technologie zugegeben. Das Flammschutzmittel wird in einem Trägermaterial dispergiert. Als Trägermaterial kommen der jeweils verwendete Polyester oder auch andere Polymere, die diesem verträglich sind, in Frage.

Wichtig bei der Masterbatch-Technologie ist, daß die Korngröße und das Schüttgewicht des Masterbatches ähnlich der Korngröße und dem Schüttgewicht des Thermoplasten ist, so daß eine homogene Verteilung und damit eine homogene Schwerentflammbarkeit erzeugt werden kann.

Erfindungswesentlich ist, daß das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck ( 20 bis 80 mbar, vorzugsweise 30 bis 60 mbar, insbesondere 40 bis 50 mbar ) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160 °C, vorzugsweise 20 °C bis 150 °C, insbesondere 30 °C bis 130 °C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90 bis 180 °C, vorzugsweise 100 °C bis 170 °C, insbesondere 110 °C bis 160 °C für 2 bis 8 Stunden, vorzugsweise 3 bis 7 Stunden, insbesondere 4 bis 6 Stunden nachgetrocknet.

Die Basisschicht B und gegebenenfalls vorhandene Zwischenschichten können zusätzlich übliche Additive, wie bspw. Stabilisatoren und/oder Antiblockmittel enthalten. Die beiden Deckschichten A und C enthalten zusätzlich übliche Additive, wie bspw. Stabilisatoren und/oder Antiblockmittel. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt.

Geeignete Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, LiF, Calcium-, Barium-, Zink- oder Mangan-Salze der eingesetzten Dicarbonsäuren, Ruß, Titandioxid, Kaolin oder vernetzte Polystyrol- oder Acrylat-Partikel.

Als Antiblockmittel können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den jeweils vorteilhaften Konzentrationen, z.B. als glykolische Dispersion während der Polykondensation oder über Masterbatche bei der Extrusion zugegeben werden.

Bevorzugte Partikel sind $SiO_2$ in kolloidaler und in kettenartiger Form. Diese Partikel werden sehr gut in die Polymermatrix eingebunden und erzeugen nur geringfügig Vakuolen. Vakuolen verursachen im allgemeinen Trübung und sind daher zweckmäßiger Weise zu vermeiden. Die Partikeldurchmesser der eingesetzten Teilchen sind prinzipiell nicht eingeschränkt. Für die Lösung der Aufgabe hat es sich jedoch als zweckmäßig erwiesen, Teilchen mit einem mittleren Primärpartikeldurchmesser von kleiner als 100 nm, bevorzugt kleiner als 60 nm und besonders bevorzugt kleiner als 50 nm und Teilchen mit einem mittleren Primärpartikeldurchmesser von größer als 1 μm, bevorzugt größer als 1,5 μm und besonders bevorzugt größer als 2 μm zu verwenden. Diese zuletzt beschriebenen Teilchen sollten jedoch keinen mittleren Partikeldurchmesser aufweisen, der größer ist als 5 μm.

Zur Erzielung der vorgenannten Eigenschaften der siegelfähigen Folie hat es sich weiterhin als zweckmäßig

erwiesen, die Partikelkonzentration in der Basisschicht B niedriger zu wählen als in den beiden Deckschichten A und C. Bei einer dreischichtigen Folie vom genannten Typ wird in der Basisschicht B die Partikelkonzentration bei 0 bis 0,15 Gew.-%, vorzugsweise 0 bis 0,12 Gew.-% und insbesondere bei 0 bis 0,10 Gew.-% liegen. Der Partikeldurchmesser der eingesetzten Teilchen ist prinzipiell nicht eingeschränkt, jedoch sind Teilchen mit einem mittleren Durchmesser von größer 1 μm besonders bevorzugt.

In der vorteilhaften Verwendungsform besteht die Folie aus drei Schichten, der Basisschicht B und beidseitig auf dieser Basisschicht aufgebrachten Deckschichten A und C, wobei die Deckschicht A gegen sich selbst und gegen die Deckschicht C siegelfähig ist.

Zur Erzielung des genannten Eigenschaftsprofils der Folie weist die Deckschicht C bevorzugt mehr Pigmente (d.h. höhere Pigmentkonzentration) als die Deckschicht A auf. Die Pigmentkonzentration in dieser Deckschicht C liegt zwischen 0,1 und 1,0 Gew.-%, vorteilhaft zwischen 0,12 und 0,8 Gew.-% und insbesondere zwischen 0,15 und 0,6 Gew.-%. Die andere, der Deckschicht C gegenüberliegende, siegelfähige Deckschicht A ist dagegen weniger mit inerten Pigmenten gefüllt. Die Konzentration der inerten Partikeln in der Schicht A liegt zwischen 0,01 und 0,2 Gew.-%, vorzugsweise zwischen 0,015 und 0,15 Gew.-% und insbesondere zwischen 0,02 und 0,1 Gew.-%.

Zwischen der Basisschicht und den Deckschichten können sich gegebenenfalls noch Zwischenschichten, bevorzugt eine Zwischenschicht befinden. Diese kann wiederum aus den für die Basisschichten beschriebenen Polymeren bestehen. In einer besonders bevorzugten Ausführungsform besteht sie aus dem für die Basisschicht verwendeten Polyester. Sie kann auch die beschriebenen Additive enthalten. Die Dicke einer Zwischenschicht ist im allgemeinen größer als 0,3 μm und liegt vorzugsweise im Bereich von 0,5 bis 15 μm, insbesondere im Bereich von 1,0 bis 10 μm und ganz besonders bevorzugt im Bereich von 1,0 bis 5 μm.

Bei der besonders vorteilhaften dreischichtigen Ausführungsform der erfindungsgemäßen Folie ist die Dicke der Deckschichten A und C im allgemeinen größer als 0,1 μm und liegt allgemein im Bereich von 0,2 bis 4,0 μm, vorteilhaft im Bereich von 0,2 bis 3,5 μm, insbesondere im Bereich von 0,3 bis 3 μm und ganz besonders bevorzugt im Bereich von 0,3 bis 2,5 μm, wobei die Deckschichten A und C gleich oder verschieden dick sein können.

Die Gesamtdicke der erfindungsgemäßen Polyesterfolie kann innerhalb weiter Grenzen variieren. Sie beträgt bevorzugt 3 bis 80 μm, insbesondere 4 bis 50 μm, besonders bevorzugt 5 bis 30 μm, wobei die Schicht B einen Anteil von vorzugsweise 5 bis 90 % an der Gesamtdicke hat.

Die Polymere für die Basisschicht B und die beiden Deckschichten A und C werden bei der Folienherstellung zweckmäßigerweise getrennt drei Extrudern zugeführt. Etwa vorhandene Fremdkörper oder Verunreinigungen lassen sich aus der Polymerschmelze vor der Extrusion abfiltrieren. Die Schmelzen werden dann in einer Mehrschichtdüse zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die Erfindung betrifft somit weiterhin ein Verfahren zur Herstellung der erfindungsgemäßen Polyesterfolie nach dem an sich bekannten Koextrusionsverfahren.

Im Rahmen dieses Verfahrens wird so vorgegangen, daß die den einzelnen Schichten der Folie entsprechenden Schmelzen durch eine Flachdüse koextrudiert werden, die so erhaltene Folie zur Verfestigung auf einer oder mehreren Walze/n abgezogen wird, die Folie anschließend biaxial gestreckt (orientiert), die biaxial gestreckte Folie thermofixiert und gegebenenfalls an der zur Behandlung vorgesehenen Oberflächenschicht corona- oder flammbehandelt wird.

Die biaxiale Streckung (Orientierung) wird im allgemeinen aufeinanderfolgend durchgeführt, wobei die aufeinanderfolgende biaxiale Streckung, bei der zuerst längs (in Maschinenrichtung) und dann quer (senkrecht zur Maschinenrichtung) gestreckt wird, bevorzugt ist.

Zunächst wird, wie beim Koextrusionsverfahren üblich, das Polymere bzw. die Polymermischung der einzelnen Schichten in einem Extruder komprimiert und verflüssigt, wobei die gegebenenfalls zugesetzten Additive bereits im Polymer bzw. in der Polymermischung enthalten sein können. Die Schmelzen werden dann gleichzeitig durch eine Flachdüse (Breitschlitzdüse) gepreßt, und die ausgepreßte mehrschichtige Folie wird auf einer oder mehreren Abzugswalzen abgezogen, wobei sie abkühlt und sich verfestigt.

Die biaxiale Verstreckung wird im allgemeinen sequentiell durchgeführt. Dabei wird vorzugsweise erst in Längsrichtung (d.h. in Maschinenrichtung, =MD-Richtung) und anschließend in Querrichtung (d.h. senkrecht zur Maschinenrichtung, =TD-Richtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei ca. 80 bis 130 °C und die Querstreckung bei ca. 80 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Vor der Querstreckung kann man eine oder beide Oberfläche(n) der Folie nach den bekannten Verfahren in-line beschichten. Die In-Line-Beschichtung kann beispielsweise zu einer verbesserten Haftung einer Metallschicht oder einer eventuell aufgebrachten Druckfarbe, aber auch zur Verbesserung des antistatischen

Verhaltens oder des Verarbeitungsverhaltens dienen.

Für die Herstellung einer Folie mit sehr guten Siegeleigenschaften hat es sich als günstig erwiesen, wenn die planare Orientierung $\Delta p$ der Folie gleich oder kleiner ist als $\Delta p$ = 0,165, besonders aber kleiner ist als $\Delta p$ = 0,163. In diesem Fall ist die Festigkeit der Folie in Dickenrichtung so groß, daß bei der Messung der Siegelnahtfestigkeit definitiv die Siegelnaht aufgetrennt wird und die Folie nicht einreißt und weiterreißt.

Es hat sich herausgestellt, daß die wesentlichen Einflußgrößen auf die planare Orientierung $\Delta p$ die Verfahrensparameter in der Längsstreckung und in der Querstreckung sind, sowie der SV-Wert (standard viscosity) des verwendeten Rohstoffes. Zu den Verfahrensparametern gehören insbesondere die Streckverhältnisse in Längs- und in Querrichtung ($\lambda_{MD}$ und $\lambda_{TD}$), die Strecktemperaturen in Längs- und in Querrichtung ($T_{MD}$ und $T_{TD}$), die Folienbahngeschwindigkeit und die Art der Streckung, insbesondere diejenige in Längsrichtung der Maschine. Erhält man beispielsweise mit einer Maschine eine planare Orientierung von $\Delta p$ = 0,167 mit dem Parametersatz $\lambda_{MD}$ = 4,8 und $\lambda_{TD}$ = 4,0 , die Strecktemperaturen in Längs- und in Querrichtung $T_{MD}$ = 80 - 118 °C und $T_{TD}$ = 80 - 125 °C, so erhält man durch Erhöhung der Längsstrecktemperatur auf $T_{MD}$ = 80 - 125 °C oder durch Erhöhung der Querstrecktemperatur auf $T_{TD}$ = 80 - 135 °C oder durch Absenkung des Längstreckverhältnisses auf $\lambda_{MD}$ = 4,3 oder durch Absenkung des Querstreckverhältnisses auf $\lambda_{TD}$ = 3,7 eine planare Orientierung $\Delta p$, die im gewünschten Bereich liegt. Die Folienbahngeschwindigkeit beträgt hierbei 340 m/min und der SV-Wert (standard viscosity) des Materials etwa 730. Die genannten Daten beziehen sich bei der Längsstreckung auf die sogenannte N-TEP Streckung, die sich zusammensetzt aus einem niedrig orientierenden Streckschritt (LOE = Low Orientation Elongation) und einem hoch orientierenden Streckschritt (REP = Rapid Elongation Process). Bei anderen Streckwerken ergeben sich prinzipiell die gleichen Verhältnisse, jedoch können die Zahlenwerte für die jeweiligen Verfahrensparameter leicht verschieden sein. Die angegeben Temperaturen beziehen sich bei der Längsstreckung auf die jeweiligen Walzentemperaturen und bei der Querstreckung auf die Folientemperaturen, die mittels Infrarot gemessen wurden.

Bei der nachfolgenden Thermofixierung wird die Folie etwa 0,1 bis 10 s lang bei einer Temperatur von ca. 150 bis 250 °C gehalten. Anschließend wird die Folie in üblicher Weise aufgewickelt.

Bevorzugt wird/werden nach der biaxialen Streckung eine oder beide Oberfläche/n der Folie nach einer der bekannten Methoden corona- oder flammbehandelt. Die Behandlungsintensität erzeugt im allgemeinen eine Oberflächenspannung im Bereich von über 45 mN/m.

Zur Einstellung weiterer gewünschter Eigenschaften kann die Folie zusätzlich beschichtet werden. Typische Beschichtungen sind haftvermittelnde, antistatisch, schlupfverbessernd oder dehäsiv wirkende Schichten. Es bietet sich an, diese zusätzliche Schichten über inline coating mittels wässriger Dispersionen vor dem Streckschritt in Querrichtung auf die Folie aufzubringen.

Die erfindungsgemäße Folie zeichnet sich durch eine hervorragende Siegelfähigkeit, eine sehr gute Stabilität gegenüber UV-Licht, eine schwere Entflammbarkeit, ein sehr gutes Handling und durch ein sehr gutes Verarbeitungsverhalten aus. Bei der Folie siegelt die siegelfähige Deckschicht A nicht nur gegen sich selbst (fin sealing), sondern auch gegen die nicht siegelfähige Deckschicht C (lap sealing). Dabei ist die lap sealing Siegelanspringtemperatur gegenüber der fin sealing-Temperatur lediglich um ca. 10 °C nach oben verschoben und die Siegelnahtfestigkeit ist um nicht mehr als 0,3 N/15 mm verschlechtert.

Außerdem sind der Glanz und die Trübung der Folie gegenüber Folien nach dem Stand der Technik verbessert. Bei der Herstellung der erfindungsgemäßen Folie ist gewährleistet, daß das Regenerat in einer Konzentration von 20 bis 60 Gew.-%, bezogen auf das Gesamtgewicht der Folie, wieder der Extrusion zugeführt werden kann, ohne daß dabei die physikalischen Eigenschaften der Folie nennenswert negativ beeinflußt werden.

Die Folie eignet sich auf Grund ihrer hervorragenden Siegeleigenschaften, auf Grund ihres sehr guten Handlings und auf Grund ihrer sehr guten Verarbeitungseigenschaften insbesondere für die Verarbeitung auf schnellaufenden Maschinen.

Darüber hinaus eignet sich die Folie auf Grund ihrer hervorragenden Eigenschaftskombinationen für eine Vielzahl verschiedener Anwendungen, beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium.

Aufgrund der guten UV-Stabilität eignet sich die erfindungsgemäße, transparente Folie weiterhin für Außenanwendungen, wie z.B. für Gewächshäuser, Überdachungen, Außenverkleidungen, Abdeckungen von Materialien, wie z.B. Stahlblechen, Anwendungen im Bausektor und Lichtwerbeprofile.

Die nachstehende Tabelle (Tabelle 1) faßt die wichtigsten erfindungsgemäßen Folieneigenschaften noch einmal zusammen.

**Tabelle 1**

| | Erfindungsgemäßer Bereich | bevorzugt | besonders bevorzugt | Einheit | Messmethode |
|---|---|---|---|---|---|
| Deckschicht A | | | | | |
| Siegelanspringtemperatur | < 110 | < 105 | < 100 | °C | intern |
| Siegelnahtfestigkeit | > 1,3 | > 1,5 | > 1,8 | N/15 mm | intern |
| Mittlere Rauhigkeit $R_a$ | < 30 | < 25 | < 20 | nm | DIN 4768, Cut-off von 0,25 mm |
| Messwertbereich für die Gasströmung | 500-4000 | 800-3500 | 1000-3000 | sec | intern |
| Glanz, 20° | > 120 | > 130 | > 140 | | DIN 67 530 |
| **Deckschicht C** | | | | | |
| COF | < 0,5 | < 0,45 | < 0,40 | | DIN 53 375 |
| Mittlere Rauhigkeit $R_a$ | 40-100 | 45-95 | 50-90 | nm | DIN 4768, Cut-off von 0,25 mm |
| Messwertbereich für die Gasströmung | < 120 | < 100 | < 80 | sec | intern |
| Glanz, 20° | > 140 | > 150 | > 160 | | DIN 67 530 |
| **weitere Folieneigenschaften** | | | | | |
| Trübung | <4 | <3 | <2.5 | % | ASTM-D 1003-52 |
| Planare Orientierung | < 0,165 | <0,163 | <0,160 | | intern |
| Brandverhalten | Die Folie erfüllt nach DIN 4102 Teil2/Teil1 die Anforderungen der Baustoffklassen B2 und B1 und besteht den UL-Test 94 | | | | |
| Bewitterungsprüfung, UV-Stabilität Eigenschaftsänderung [i)] | <20% | | | | ISO 4892 |
| [i)] Die Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, der Verfärbung, der Oberflächendefekte, der Trübung und des Glanzes geprüft. | | | | | |

Zur Charakterisierung der Rohstoffe und der Folien wurden die folgenden Meßmethoden benutzt:

DIN = Deutsches Institut für Normung
ISO = International Organization for Standardization
ASTM = American Society for Testing and Materials

**SV (DCE), IV (DVE)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}67 \cdot 10^{-4} SV \cdot (DCE) + 0{,}118$$

**Bestimmung der Siegelanspringtemperatur (Mindestsiegeltemperatur)**

Mit dem Siegelgerät HSG/ET der Firma Brugger werden heißgesiegelte Proben (Siegelnaht 20 mm x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wird. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

**Siegelnahtfestigkeit**

Zur Bestimmung der Siegelnahtfestigkeit wurden zwei 15 mm breite Folienstreifen übereinandergelegt und bei 130 °C, einer Siegelzeit von 0,5 s und einem Siegeldruck von 2 bar (Gerät: Brugger Typ NDS, einseitig beheizte Siegelbacke) versiegelt. Die Siegelnahtfestigkeit wurde nach der T-Peel-Methode bestimmt.

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mittels der sogenannten Tintenmethode (DIN 53 364) bestimmt.

**Trübung**

Die Trübung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**Bestimmung der Korngrößen auf Folienoberflächen**

Die Bestimmung der Größenverteilung von Erhebungen auf Folienoberflächen erfolgt mit einem Rasterelektronenmikroskop und einem Bildanalysesystem. Verwendet wird das Rasterelektronenmikroskop XL30 CP der Fa. Philips mit einem integrierten Bildanalyseprogramm AnalySIS der Fa. Soft-Imaging System.

Für diese Messungen werden Folienproben flach auf einen Probenhalter aufgebracht. Anschließend werden diese unter einem Winkel a mit einer dünnen Metallschicht (z. B. aus Silber) schräg bedampft. Dabei ist a der Winkel zwischen Probenoberfläche und der Ausbreitungsrichtung des Metalldampfes. Durch diese Schrägbedampfung entsteht hinter der Erhebung ein Schattenwurf. Da die Schatten noch nicht elektrisch leitfähig sind, wird die Probe anschließend noch mit einem zweiten Metall (z.B. Gold) bedampft oder gesputtert, wobei die zweite Beschichtung senkrecht auf die Probenoberfläche auftrifft und somit bei der zweiten Beschichtung keine Schatten entstehen.

Die so präparierten Probenoberflächen werden in einem Rasterelektronenmikroskop (REM) abgebildet. Die Schatten der Erhebungen sind infolge des Materialkontrastes der Metalle sichtbar. Die Probe wird im REM so orientiert, daß die Schatten parallel zu einem Bildrand verlaufen. Für die Bildaufnahme werden folgende Bedingungen am REM eingestellt: Sekundärelektronendetektor, Arbeitsstabstand 10 mm, Beschleunigungsspannung 10 kV und Spot 4,5. Die Helligkeit und Kontrast werden so eingestellt, daß sämtliche Bildinformationen als Grauwerte dargestellt werden und die Intensität des Grundrauschens so klein ist, daß er nicht als Schatten detektiert wird. Die Länge der Schatten wird mit dem Bildanalyse-Programm ausgemessen. Der Schwellwert für die Schattenerkennung wird auf die Stelle gelegt, wo die 2. Ableitung der Grauwertverteilung des Bildes den Nullpunkt durchquert. Vor der Schattenerkennung wird das Bild mit einem NxN-Filter (Größe 3, 1 Iteration) geglättet. Durch die Setzung eines Rahmens ("frame") wird sichergestellt,

daß Erhebungen, die im Bild nicht vollständig abgebildet werden, nicht mitgemessen werden. Die Vergrößerung, die Rahmengröße und die Anzahl der ausgewerteten Bildern werden so gewählt, daß insgesamt 0,36 $mm^2$ Folienoberfläche ausgewertet werden.

Die Höhe der einzelnen Erhebungen wird aus den einzelnen Schattenlängen mit folgender Beziehung errechnet:

$$h = (\tan a) * L$$

wobei h die Höhe der Erhebung, a der Bedampfungswinkel und L die Schattenlänge ist. Die so ermittelten Erhebungen werden in Klassen eingeteilt, um zu einer Häufigkeitsverteilung zu kommen. Die Einteilung erfolgt in 0,05 mm breite Klassen zwischen 0 und 1 mm, wobei die kleinste Klasse (0 bis 0,05 mm) für weitere Auswertungen nicht verwendet wird. Die Durchmesser (Ausbreitung senkrecht zur Schattenwurfsrichtung) der Erhebungen werden in ähnlicher Weise in 0,2 mm breiten Klassen von 0 bis 10 mm eingestuft, wobei auch hier die kleinste Klasse für die weitere Auswertung verwendet wird.

**Oberflächengasströmungszeit**

Das Prinzip des Messverfahrens basiert auf der Luftströmung zwischen einer Folienseite und einer glatten Silizium-Wafer-Platte. Die Luft strömt von der Umgebung in einen evakuierten Raum, wobei die Grenzfläche zwischen Folie und Silizium-Wafer-Platte als Strömungswiderstand dient.
Eine runde Folienprobe wird auf einer Silizium-Wafer-Platte, in deren Mitte eine Bohrung die Verbindung zu dem Rezipienten gewährleistet, gelegt. Der Rezipient wird auf einen Druck kleiner 0,1 mbar evakuiert. Bestimmt wird die Zeit in Sekunden, die die Luft benötigt, um in dem Rezeptienten einen Druckanstieg von 56 mbar zu bewirken.

| Messbedingungen | |
|---|---|
| Messfläche | 45,1 $cm^2$ |
| Anpressgewicht | 1276 g |
| Lufttemperatur | 23°C |
| Luftfeuchte | 50 % relative Feuchte |
| Gassammelvolumen | 1,2 $cm^3$ |
| Druckintervall | 56 mbar |

**Bestimmung der planaren Orientierung $\Delta p$**

Die Bestimmung der planaren Orientierung erfolgt über die Messung der Brechungsindizes(n) mit dem Abbe-Refraktometer.

Probenvorbereitung

Probengröße und Probenlänge: 60 bis 100 mm
Probenbreite: entspricht Prismenbreite von 10 mm
Zur Bestimmung von $n_{MD}$ und $n_{\alpha}$ (=$n_z$) muß die zu messende Probe aus der Folie ausgeschnitten werden, bei der die Laufkante der Probe exakt mit der TD-Richtung übereinstimmen muß. Zur Bestimmung von $n_{MD}$ und $n_{\alpha}$ (=$n_z$) muß die zu messende Probe aus der Folie ausgeschnitten werden, bei der die Laufkante der Probe exakt mit der MD-Richtung übereinstimmen muß. Die Proben sind aus der Mitte der Folienbahn zu entnehmen. Es ist dafür Sorge zu tragen, daß das Abbe-Refraktometer eine Temperatur von 23 °C hat. Auf das vor der Messung gut gesäuberte untere Prisma wird mit Hilfe eines Glasstabes ein wenig Dijodmethan (N=1,745) bzw. Dijodmethan-Bromnaphthalin-Gemisch aufgetragen. Der Brechungsindex des Gemisches muß größer als 1,685 sein. Darauf wird zuerst die in TD-Richtung ausgeschnittene Probe aufgelegt, so daß die gesamte Prismenoberfläche bedeckt ist. Mit Hilfe eines Papiertaschentuches wird nun die Folie fest auf das Prisma aufgebügelt, so daß die Folie fest und glatt aufliegt. Die überflüssige Flüssigkeit muß abgesaugt werden. Danach wird ein wenig von der Meßflüssigkeit auf die Folie getropft. Das zweite Prisma wird heruntergeklappt und fest angedrückt. Nun wird mit Hilfe der rechten Rändelschraube die Anzeigeskala soweit gedreht, bis im Bereich 1,62 bis 1,68 ein Übergang von hell auf dunkel im Sichtfenster zu sehen ist. Ist der Übergang von hell auf dunkel nicht scharf, werden mit Hilfe der oberen Rändelschraube die Farben so zusammengeführt, daß nur eine helle und eine dunkle Zone sichtbar ist. Die scharfe Übergangslinie wird mit Hilfe der unteren Rändelschraube in den Kreuzungspunkt der beiden (im Okular) diagonalen Linien gebracht. Der nun in der Meßskala angezeigte Wert wird abgelesen und in

das Messprotokoll eingetragen. Dies ist der Brechungsindex in Maschinenrichtung $n_{MD}$. Nun wird die Skala mit der unteren Rändelschraube soweit verdreht, daß der im Okular sichtbare Bereich zwischen 1,49 und 1,50 zu sehen ist. Jetzt wird der Brechungsindex in $n_\alpha$ bzw. $n_z$ (in Dickenrichtung der Folie) ermittelt. Damit der nur schwach sichtbare Übergang besser zu sehen ist, wird auf das Okular eine Polarisationsfolie gelegt. Diese ist solange zu drehen, bis der Übergang deutlich zu sehen ist. Es gilt das gleiche wie bei der Bestimmung von $n_{MD}$. Ist der Übergang von hell auf dunkel nicht scharf (farbig), dann werden mit Hilfe der oberen Rändelschraube die Farben zusammengeführt, so daß ein scharfer Übergang zu sehen ist. Diese scharfe Übergangslinie wird mit Hilfe der unteren Rändelschraube in den Kreuzungspunkt der beiden diagonalen Linien gebracht und den auf der Skala angezeigten Wert abgelesen und in die Tabelle eingetragen.
Anschließend wird die Probe gedreht und die entsprechenden Brechungsindizes $n_{MD}$ und $n_\alpha$ (=$n_z$) der anderen Oberflächenseite gemessen und in eine entsprechende Tabelle eingetragen.
Nach der Bestimmung der Brechungsindizes in MD-Richtung bzw. in Dickenrichtung wird der in MD-Richtung herausgeschnittene Probenstreifen aufgelegt und entsprechend die Brechungsindizes $n_{TD}$ und $n_\alpha$ (= $n_z$) bestimmt. Der Streifen wird umgedreht und die Werte für die B-Seite gemessen. Die Werte für die A-Seite und die B-Seite werden zu mittleren Brechungswerten zusammengefaßt. Die Orientierungswerte werden dann aus den Brechungsindizes nach den folgenden Formeln berechnet:

$$\Delta n = n_{MD} - n_{TD}$$

$$\Delta p = (n_{MD} + n_{TD})/2 - n_z$$

$$n_{av} = (n_{MD} + n_{TD} + n_z)/3$$

**Oberflächendefekte**

Die Oberflächendefekte werden visuell bestimmt.

**Mechanische Eigenschaften**

Der E-Modul, die Reißfestigkeit und die Reißdehnung werden in Längs- und Querrichtung nach ISO 527-1-2 gemessen.

**Bewitterung (beidseitig), UV-Stabilität**

Die UV-Stabilität wird nach der Testspezifikation ISO 4892 wie folgt geprüft

| | |
|---|---|
| Testgerät: | Atlas Ci 65 Weather Ometer |
| Testbedingungen: | ISO 4892, d. h. künstliche Bewitterung |
| Bestrahlungszeit: | 1000 Stunden (pro Seite) |
| Bestrahlung: | 0,5 $W/m^2$, 340 nm |
| Temperatur: | 63 °C |
| Relative Luftfeuchte: | 50 % |
| Xenonlampe: | innerer und äußerer Filter aus Borosilikat |
| Bestrahlungszyklen: | 102 Minuten UV-Licht, dann 18 Minuten UV-Licht mit Wasserbesprühung der Proben dann wieder 102 Minuten UV-Licht usw. |

**Farbveränderung**

Die Farbveränderung der Proben nach der künstlichen Bewitterung wird mit einem Spektralphotometer nach DIN 5033 gemessen.

Je größer die numerische Abweichung vom Standard ist, desto größer ist der Farbunterschied. Numerische Werte von <0,3 sind vernachlässigbar und bedeuten, daß keine signifikante Farbänderung vorliegt.

**Gelbwert**

Der Gelbwert (YID) ist die Abweichung von der Farblosigkeit in Richtung "Gelb" und wird gemäß DIN 6167 gemessen. Gelbwerte (YID) von <5 sind visuell nicht sichtbar.

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

**Beispiel 1**

Chips aus Polyethylenterephthalat (hergestellt über das Umesterungsverfahren mit Mn als Umesterungskatalysator, Mn-Konzentration: 100 ppm) wurden bei 150 °C auf eine Restfeuchte von unterhalb 100 ppm getrocknet und zusammen mit den angegebenen Masterbatches dem Extruderfür die Basisschicht B zugeführt. Ebenfalls wurden Chips aus Polyethylenterephthalat zusammen mit den angegebenen Masterbatches dem Extruder für die nicht siegelfähige Deckschicht C zugeführt.

Daneben wurden Chips aus einem linearen Polyester hergestellt, der aus einem amorphen Copolyester mit 78 Mol.-% Ethylenterephthalat und 22 Mol-% Ethylenisophthalat besteht (hergestellt über das Umesterungsverfahren mit Mn als Umesterungskatalysator, Mn-Konzentration: 100 ppm). Der Copolyester wurde bei einer Temperatur von 100 °C auf eine Restfeuchte von unterhalb 200 ppm getrocknet und zusammen mit den angegebenen Masterbatches dem Extruder für die siegelfähige Deckschicht A zugeführt.

Der Hydrolysestabilisator und das Flammschutzmittel werden in Form eines Masterbatches zudosiert. Das Masterbatch setzt sich aus 20 Gew.-% Flammschutzmittel, 1 Gew.-% Hydrolysestabilisator und 79 Gew.-% Polyethylenterephthalat zusammen. Bei dem Hydolysestabilisator handelt es sich um Pentaerylthrityl-Tetrakis-3-(3,5-di-Tertiärbutyl-4-Hydroxylphenyl)-Propionat .Bei dem Flammschutzmittel handelt es sich um Dimethylphosphonat (® Armgard P 1045). Das Masterbatch hat ein Schüttgewicht von 750 kg/$m^3$ und einen Erweichungspunkt von 69 °C.

Der UV-Stabilisator 2-(4,6-Diphenyl-1,3,5-triazin-2-yl)-5-(hexyl)-oxyphenol (®Tinuvin 1577) wird in Form von Masterbatchen zudosiert. Die Masterbatche setzen sich aus 5 Gew.-% Tinuvin 1577 als Wirkstoffkomponente und 95 Gew.-% Polyethylenterephthalat (für die Deckschicht C), bzw. 95 Gew.-% Polyethylenisophthalat (für die Deckschicht A), zusammen. Die 5 Gew.-%igen Tinuvin 1577-Masterbatche werden lediglich den beiden dicken Deckschichten mit 20 Gew.-% über die Masterbatch-Technologie zudosiert.

Die Masterbatches wurden bei Raumtemperatur aus separaten Dosierbehältern in einem Vakuumtrockner gefüllt, der von dem Einfüllzeitpunkt bis zum Ende der Verweilzeit ein Temperaturspektrum von 25 °C bis 130 °C durchläuft. Während der ca. 4-stündigen Verweilzeit wird die Mischung beider Masterbatche mit 61 Upm gerührt. Die vorkristallisierte bzw. vorgetrocknete Mischung der Masterbatche wird in dem nachgeschalteten, ebenfalls unter Vakuum stehenden Hopper bei 140 °C 4 Stunden nachgetrocknet.

Es wurde durch Koextrusion und anschließende stufenweise Orientierung in Längs- und Querrichtung eine transparente dreischichtige Folie mit ABC-Aufbau und einer Gesamtdicke von 12 µm hergestellt. Die Dicke der jeweiligen Deckschichten ist der Tabelle 2 zu entnehmen.
Deckschicht A, Mischung aus:

| | | |
|---|---|---|
| 20,0 | Gew.-% | UV-Masterbatch auf Basis von Polyethylenisophthalat |
| 77,0 | Gew.-% | Copolyester mit einem SV-Wert von 800 |
| 3,0 | Gew.-% | Masterbatch aus 97,75 Gew.-% Copolyester (SV-Wert von 800) und 1,0 Gew.-% ® Sylobloc 44 H (synthetisches $SiO_2$ der Fa. Grace) und 1,25 Gew.-% ® Aerosil TT 600 (kettenartiges $SiO_2$ der Fa. Degussa) |

Basisschicht B:

| | | |
|---|---|---|
| 90,0 | Gew.-% | Polyethylenterephthalat mit einem SV-Wert von 800 |
| 10,0 | Gew.-% | Masterbatch, welches Flammschutzmittel und Hydrolyse-stabilisator enthält |

Deckschicht C, Mischung aus:

| | | |
|---|---|---|
| 20,0 | Gew.-% | Masterbatch, welches Flammschutzmittel und Hydrolyse-stabilisator enthält |
| 20,0 | Gew.-% | UV-Masterbatch auf Basis von Polyethylenterephthalat |
| 48 | Gew.-% | Polyethylenterephthalat mit einem SV-Wert von 800 |
| 12 | Gew.-% | Masterbatch aus 97,75 Gew.-% Copolyester (SV-Wert von 800) und 1,0 Gew.-% ® Sylobloc 44 H (synthetisches $SiO_2$ der Fa. Grace) und 1,25 Gew.-% ® Aerosil TT 600 (kettenartiges $SiO_2$ der Fa. Degussa) |

Die Herstellungsbedingungen in den einzelnen Verfahrensschritten waren:

| | | | |
|---|---|---|---|
| Extrusion: | Temperaturen | A-Schicht: | 270 °C |
| | | B-Schicht: | 290 °C |
| | | C-Schicht: | 290 °C |
| | Düsenspaltweite: | | 2,5 mm |
| | Temperatur der Abzugswalze: | | 30 °C |
| Längsstreckung: | Temperatur: | | 80 - 125 °C |
| | Längsstreckverhältnis: | | 4,2 |
| Querstreckung: | Temperatur: | | 80 - 135 °C |
| | Querstreckverhältnis: | | 4,0 |
| Fixierung: | Temperatur: | | 230 °C |
| Dauer: | | | 3 s |

Die Folie hatte die geforderten guten Siegeleigenschaften und zeigt das gewünschte Handling und das gewünschte Verarbeitungsverhalten. Der Folienaufbau und die erzielten Eigenschaften derart hergestellter Folien sind in den Tabellen 2 und 3 dargestellt (VB=Vergleichbeispiel).

Die Folien in diesem und in allen nachfolgenden Beispielen wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, der Verfärbung, der Oberflächendefekte, der Trübung und des Glanzes geprüft (vgl. Tabelle 4).

Die Folie erfüllt nach DIN 4102 Teil 2 und Teil 1 die Anforderungen der Baustoffklassen B2 und B1. Die Folie besteht den UL-Test 94.

**Beispiel 2**

Im Vergleich zu Beispiel 1 wurde die Deckschichtdicke der siegelfähigen Schicht A von 1,5 auf 2,0 μm angehoben. Die Siegeleigenschaften haben sich hierdurch verbessert, insbesondere ist die Siegelnahtfestigkeit deutlich größer geworden.

**Beispiel 3**

Im Vergleich zu Beispiel 1 wurde jetzt eine 20 μm dicke Folie produziert. Die Deckschichtdicke der siegelfähigen Schicht A betrug 2,5 μm und diejenige der nicht siegelfähigen Schicht C betrug 2,0 μm. Die Siegeleigenschaften haben sich hierdurch nochmals verbessert, insbesondere ist die Siegelnahtfestigkeit deutlich größer geworden. Das Handling der Folie hat sich dabei tendenziell verbessert.

**Beispiel 4**

Im Vergleich zu Beispiel 3 wurde das Copolymere für die siegelfähige Deckschicht A geändert. Anstelle des amorphen Copolyesters mit 78 Mol.-% Ethylenterephthalat und 22 Mol-% Ethylenisophthalat wurde jetzt ein amorpher Copolyester mit 70 Mol.-% Ethylenterephthalat und 30 Mol-% Ethylenisophthalat verwendet. Der Rohstoff wurde auf einem Zweischneckenextruder mit Entgasung verarbeitet, ohne daß er vorgetrocknet werden musste. Die Deckschichtdicke der siegelfähigen Schicht A betrug wiederum 2,5 μm und diejenige der nicht siegelfähigen Schicht C betrug 2,0 μm. Die Siegeleigenschaften haben sich hierdurch verbessert, insbesondere ist die Siegelnahtfestigkeit deutlich größer geworden. Zur Erzielung eines guten Handlings und eines guten Verarbeitungsverhalten der Folie wurde die Pigmentkonzentration in den beiden Deckschichten leicht angehoben.

**Vergleichsbeispiel 1**

Im Vergleich zu Beispiel 1 wurde jetzt die siegelfähige Deckschicht A nicht pigmentiert. Die Siegeleigenschaften haben sich zwar hierdurch etwas verbessert, jedoch ist das Handling der Folie und das Verarbeitungsverhalten deutlich schlechter geworden.

**Vergleichsbeispiel 2**

Im Vergleich zu Beispiel 1 wurde jetzt die siegelfähige Deckschicht A so hoch pigmentiert wie die nicht siegelfähige Deckschicht C. Das Handling und die Verarbeitungseigenschaften der Folie haben sich durch diese Maßnahme verbessert, jedoch sind die Siegeleigenschaften deutlich schlechter geworden.

**Vergleichsbeispiel 3**

Im Vergleich zu Beispiel 1 wurde jetzt die nicht siegelfähige Deckschicht C deutlich weniger pigmentiert. Das Handling der Folie und das Verarbeitungsverhalten der Folie ist deutlich schlechter geworden.

**Vergleichsbeispiel 4**

Es wurde Beispiel 1 aus der EP-A 0 035 835 nachgearbeitet. Das Siegelverhalten der Folie, das Handling der Folie und das Verarbeitungsverhalten der Folie ist schlechter als bei den erfindungsgemäßen Beispielen.

**Tabelle 2**

| Beispiel | Foliendicke µm | Folienaufbau | Schichtdicken µm | | | Pigmente in den Schichten | | | mittlerer Pigment-Durchmesser in Schichten µm | | | Pigmentkonzentrationen ppm (Gewichtsteile) | | |
|---|---|---|---|---|---|---|---|---|---|---|---|---|---|---|
| | | | A | B | C | A | B | C | A | B | C | A | B | C |
| B1 | 12 | ABC | 1,5 | 9 | 1,5 | Sylobloc 44 H | kein | Sylobloc 44 H | 2,5 | | 2,5 | 300 | 0 | 1200 |
| | | | | | | Aerosil TT 600 | | Aerosil TT 600 | 0,04 | | 0,04 | 375 | | 1500 |
| B2 | 12 | ABC | 2,0 | 8,5 | 1,5 | Sylobloc 44 H | kein | Sylobloc 44 H | 2,5 | | 2,5 | 300 | 0 | 1200 |
| | | | | | | Aerosil TT 600 | | Aerosil TT 600 | 0,04 | | 0,04 | 375 | | 1500 |
| B3 | 20 | ABC | 2,5 | 15,5 | 2,0 | Sylobloc 44 H | kein | Sylobloc 44 H | 2,5 | | 2,5 | 300 | 0 | 1200 |
| | | | | | | Aerosil TT 600 | | Aerosil TT 600 | 0,04 | | 0,04 | 375 | | 1500 |
| B4 | 20 | ABC | 2,5 | 15,5 | 2,0 | Sylobloc 44 H | kein | Sylobloc 44 H | 2,5 | | 2,5 | 400 | 0 | 1500 |
| | | | | | | Aerosil TT 600 | | Aerosil TT 600 | 0,04 | | 0,04 | 500 | | 1875 |
| VB1 | 12 | ABC | 1,5 | 9 | 1,5 | kein | kein | Sylobloc 44 H | | | 2,5 | | 0 | 1200 |
| | | | | | | | | Aerosil TT 600 | | | 0,04 | | | 1500 |
| VB2 | 12 | ABC | 1,5 | 9 | 1,5 | Sylobloc 44 H | kein | Sylobloc 44 H | 2,5 | | 2,5 | 300 | 0 | 1200 |
| | | | | | | Aerosil TT 600 | | Aerosil TT 600 | 0,04 | | 0,04 | 375 | | 1500 |
| VB3 | 12 | ABC | 1,5 | 9 | 1,5 | Sylobloc 44 H | kein | Sylobloc 44 H | 2,5 | | 2,5 | 300 | 0 | 600 |
| | | | | | | Aerosil TT 600 | | Aerosil TT 600 | 0,04 | | 0,04 | 375 | | 750 |

(fortgesetzt)

| Beispiel | Foliendicke µm | Folienaufbau | Schichtdicken µm | | | Pigmente in den Schichten | | | mittlerer Pigment-Durchmesser in Schichten µm | | | Pigmentkonzentrationen ppm (Gewichtsteile) | | |
|---|---|---|---|---|---|---|---|---|---|---|---|---|---|---|
| | | | A | B | C | A | B | C | A | B | C | A | B | C |
| VB4 | 15 | AB | 2,25 | 12,75 | | Gasil 35 EP-A 0 035 835 | kein | | 3 | | | 2500 | 0 | |

## Tabelle 3

| Beispiel | Siegelanspringtemperatur °C | Siegelnahtfestigkeit N/15mm | Reibung COF | Mittlere Rauhigkeit $R_a$ nm | | Messwerte für die Gasströmung sec | | Konstanten A/B | | Δp | Glanz 20° | | Trübung | Wickelverhalten und Handling | Verarbeitungsverhalten |
|---|---|---|---|---|---|---|---|---|---|---|---|---|---|---|---|
| | A-Seite gegen A-Seite | A-Seite gegen A-Seite | C-Seite gegen C-Seite | A-Seite | C-Seite | A-Seite | C-Seite | A-Seite | C-Seite | | A-Seite | C-Seite | | | |
| B 1 | 100 | 2,0 | 0,45 | 25 | 65 | 1200 | 80 | 0,5 | 3,06 | 0,165 | 140 | 170 | 2,5 | ++ | ++ |
| B 2 | 98 | 2,7 | 0,45 | 26 | 65 | 1280 | 80 | 0,5 | 3,06 | 0,165 | 140 | 170 | 2,5 | ++ | ++ |
| B 3 | 95 | 3,0 | 0,41 | 23 | 61 | 1110 | 80 | 0,5 | 3,06 | 0,165 | 130 | 170 | 3,0 | ++ | ++ |
| B 4 | 85 | 3,3 | 0,40 | 23 | 65 | 1300 | 60 | 0,5 | 3,06 | 0,165 | 130 | 170 | 3,0 | ++ | ++ |
| VB 1 | 98 | 2,1 | 0,45 | 10 | 65 | 10000 | 80 | | | 0,165 | 160 | 170 | 1,5 | - | - |
| VB 2 | 110 | 1,0 | 0,45 | 65 | 65 | 80 | 80 | | | 0,165 | 130 | 170 | 2,8 | - | - |
| VB 3 | 100 | 2,0 | 0,45 | 25 | 37 | 1200 | 150 | | | 0,165 | 160 | 190 | 1,5 | - | - |
| VB 4 | 115 | 0,97 | >2 | 70 | 20 | 50 | >5000 | | | | | | 12 | - | - |

Zeichenerklärung beim Wickelverhalten, Handling und beim Verarbeitungsverhalten der Folien:

++: keine Klebeneigung an Walzen oder anderen mechanischen Teilen, keine Blockprobleme beim Wickeln und bei der Verarbeitung auf Verpackungsmaschinen, niedrige Herstellungskosten

-: Klebeneigung an Walzen oder anderen mechanischen Teilen, Blockprobleme beim Wickeln und bei der Verarbeitung auf Verpackungsmaschinen, hohe Herstellkosten durch aufwendiges Handling der Folie in den Maschinen

**Tabelle 4**

| Beispiel | Bewitterung | E-Modul N/mm² | | Reißfestigkeit N/mm² | | Reißdehnung % | | Gesamtverfärbung E | Oberflächendefekte | Glanz | | Trübung |
|---|---|---|---|---|---|---|---|---|---|---|---|---|
| | | längs | quer | längs | quer | längs | quer | | | A-Seite | C-Seite | |
| B1 | Vorher | 4300 | 5800 | 220 | 280 | 170 | 100 | | | 140 | 170 | 2,5 |
| | Nachher | 4100 | 5480 | 190 | 270 | 150 | 90 | 0,2 | keine | 132 | 165 | 2,8 |
| B2 | Vorher | 4200 | 5600 | 215 | 260 | 170 | 100 | | | 140 | 170 | 2,5 |
| | Nachher | 4030 | 5400 | 190 | 250 | 150 | 90 | 0,25 | keine | 138 | 165 | 2,8 |
| B3 | Vorher | 4500 | 5700 | 230 | 280 | 175 | 105 | | | 130 | 170 | 3,0 |
| | Nachher | 4000 | 5350 | 196 | 255 | 150 | 89 | 0,24 | keine | 138 | 155 | 3,7 |
| B4 | Vorher | 4300 | 5800 | 220 | 275 | 178 | 111 | | | 130 | 170 | 3,0 |
| | Nachher | 3900 | 5360 | 192. | 248 | 148 | 92 | 0,27 | keine | 138 | 165 | 3,5 |

**Patentansprüche**

1. Biaxial orientierte Polyesterfolie, welche eine Basisschicht B aus Polyethylenterephthalat und eine siegelfähige Deckschicht A und eine auf der anderen Seite der Basisschicht befindliche nicht siegelfähige Deckschicht C und gegebenenfalls weitere Zwischenschichten aufweist, wobei die Deckschichten A und C mindestens ein Antiblockmittel enthalten, und welche mindestens einen UV-Absorber und mindestens ein Flammschutzmittel enthält und wobei als Polyester für die Deckschicht A ein Copolyester verwendet wird, der überwiegend aus Isophthalsäure-, Terephthalsäure- und Ethylenglykoleinheiten besteht und wobei die Deckschicht A eine Siegelanspringtemperatur von <110°C aufweist und die Konzentration an Antiblockmittel in der Basisschicht B 0 - 0,15 Gew.-%, in der Deckschicht C 0,1 - 1 Gew.-% und in der Deckschicht A 0,01 - 0,2 Gew.-% beträgt und der mittlere Partikeldurchmesser der Antiblockmittel kleiner als 100 nm und größer als 1 µm ist.

2. Polyesterfolie gemäß Anspruch 1, **dadurch gekennzeichnet, daß** sie einen Schichtaufbau A-B-C aufweist.

3. Polyesterfolie gemäß einem oder mehreren der Ansprüche 1 oder 2, **dadurch gekennzeichnet, daß** der Copolyester der Deckschicht A zu 40 - 95 Mol-%, bevorzugt 50 - 95 Mol-%, insbesondere zu 60 - 85 Mol-% aus Ethylenterephthalateinheiten besteht, und der zu 100 Mol-% verbleibende Rest aus Ethylenisophthalateinheiten besteht.

4. Polyester gemäß einem oder mehreren der Ansprüche 1 bis 3, **dadurch gekennzeichnet, daß** die Basisschicht keine Antiblockmittel enthält oder die Konzentration an Antiblockmittel in der Basisschicht B geringer als in den Deckschichten A und C ist.

5. Polyester gemäß einem oder mehreren der Ansprüche 1 bis 4, **dadurch gekennzeichnet, daß** die Konzentration an Antiblockmittel in der nicht siegelfähigen Deckschicht C höher als in der siegelfähigen Deckschicht A ist.

6. Polyesterfolie gemäß einem oder mehreren der Ansprüche 1 bis 5, **dadurch gekennzeichnet, daß** als Antblockmittel $SiO_2$ verwendet wird.

7. Polyesterfolie gemäß einem oder mehreren der Ansprüche 1 bis 6, **dadurch gekennzeichnet, daß** die Dicke der Deckschichten gleich oder verschieden ist und 0,2 bis 4,0 µm, bevorzugt 0,3 bis 3 µm und insbesondere 0,3 bis 2,5 µm beträgt.

8. Polyesterfolie gemäß einem oder mehreren der Ansprüche 1 bis 7, **dadurch gekennzeichnet, daß** der UV-Absorber und/oder das Flammschutzmittel in der Basisschicht und/oder den Deckschichten enthalten ist.

9. Polyesterfolie gemäß einem oder mehreren der Ansprüche 1 bis 8, **dadurch gekennzeichnet, daß** als Flammschutzmittel organische Phosphorverbindungen oder Mischungen von organischen Phosphorverbindungen und als UV-Absorber 2-Hydroxybenzotriazole oder Triazine oder Mischungen dieser UV-Absorber verwendet werden.

10. Polyesterfolie gemäß einem oder mehreren der Ansprüche 1 bis 9, **dadurch gekennzeichnet, daß** als UV-Absorber 2-(4,6-Diphenyl-1,3,5-triazin-2-yl)-5-(hexyl)oxyphenol oder 2,2'-Methylen-bis-6-(2H-benzotriazol-2-yl)-4-(1,1,2,2-tetramethylpropyl)-phenol oder Mischungen dieser UV-Absorber gegebenenfalls mit anderen UV-Absorbern verwendet werden.

11. Polyesterfolie gemäß einem oder mehreren der Ansprüche 1 bis 10, **dadurch gekennzeichnet, daß** die Konzentration des UV-Absorbers oder der UV-Absorber 0,01 - 5 Gew.-%, bezogen auf das Gewicht der sie enthaltenden Schichten, beträgt.

12. Polyesterfolie gemäß einem oder mehreren der Ansprüche 1 bis 11, **dadurch gekennzeichnet, daß** das Flammschutzmittel in dem es enthaltenden thermoplastischen Polyester löslich ist.

13. Polyesterfolie gemäß einem oder mehreren der Ansprüche 1 bis 12, **dadurch gekennzeichnet, daß** als Flammschutzmittel Dimethyl-methylphosphonat oder Mischungen von organischen Phosphorverbindungen verwendet werden.

14. Polyesterfolie gemäß einem oder mehreren der Ansprüche 1 bis 13, **dadurch gekennzeichnet, daß** die Konzentration des Flammschutzmittels oder der Flammschutzmittel 0,5 - 30 Gew.-%, bevorzugt 1 - 20 Gew.-%, bezogen auf das Gewicht der sie enthaltenden Schichten, beträgt.

15. Polyesterfolie gemäß einem oder mehreren der Ansprüche 1 bis 14, **dadurch gekennzeichnet, daß** sie mindestens einen Hydrolysestabilisator enthält.

16. Polyesterfolie gemäß einem oder mehreren der Ansprüche 1 bis 15, **dadurch gekennzeichnet, daß** die Konzentration des Hydrolysestabilisators oder der Hydrolysestabilisatoren 0,1 bis 1 Gew.-%, bezogen auf das Gewicht der sie enthaltenden Schichten, beträgt.

17. Verfahren zur Herstellung einer Polyesterfolie gemäß einem oder mehreren der Ansprüche 1 bis 16, **dadurch gekennzeichnet, daß** man die für die Herstellung der Basis- und Deckschichten und gegebenenfalls Zwischenschichten erforderlichen Ausgangsstoffe über Extruder durch eine Mehrschichtdüse koextrudiert und die erhaltene Folie biaxial verstreckt und thermofixiert und gegebenenfalls beschichtet.

18. Verfahren gemäß Anspruch 17, **dadurch gekennzeichnet, daß** das Flammschutzmittel und/oder der UV-Absorber und gegebenenfalls der Hydrolysestabilisator mittels der Materbatch-Technologie zugesetzt werden.

19. Verwendung einer Polyesterfolie gemäß einem oder mehreren der Ansprüche 1 bis 16 beispielsweise für Innenraumverkleidungen, für Messebau und Messeartikel, als Displays, für Schilder, für Schutzverglasungen von Maschinen und Fahrzeugen, im Beleuchtungssektor, im Laden- und Regalbau, als Werbeartikel, Kaschiermedium.

## Claims

1. A biaxially oriented polyester film which has a base layer B made from polyethylene terephthalate, and has a sealable outer layer A and has a nonsealable outer layer C located on the other side of the base layer, and, if desired, has other intermediate layers, where the outer layers A and C comprise at least one antiblocking agent, and the film comprises at least one UV absorber and at least one flame retardant, the polyester used for the outer layer A comprises a copolyester which is composed mainly of isophthalic acid units, terephthalic acid units and ethylene glycol units, the outer layer A has a minimum sealing temperature of <110 °C, and the concentration of antiblocking agent is from 0 to 0.15 % by weight in the base layer B, from 0.1 to 1 % by weight in the outer layer C and from 0.01 to 0.2 % by weight in the outer layer A, and the average particle diameter of the antiblocking agents is below 100 nm and above 1 μm.

2. The polyester film as claimed in claim 1, which has an A-B-C layer structure.

3. The polyester film as claimed in one or more of claims 1 or 2, wherein from 40 to 95 mol%, preferably from 50 to 95 mol%, in particular from 60 to 85 mol%, of the copolyester of the outer layer A is composed of ethylene terephthalate units, and the remainder to give 100 mol% is composed of ethylene isophthalate units.

4. The polyester film as claimed in one or more of claims 1 to 3, wherein the base layer comprises no antiblocking agents, or the concentration of antiblocking agent in the base layer B is lower than in the outer layers A and C.

5. The polyester film as claimed in one or more of claims 1 to 4, wherein the concentration of antiblocking agent in the nonsealable outer layer C is higher than in the sealable outer layer A.

6. The polyester film as claimed in one or more of claims 1 to 5, wherein the antiblocking agent used comprises $SiO_2$.

7. The polyester film as claimed in one or more of claims 1 to 6, wherein the thickness of the outer layers is identical or different and is from 0.2 to 4.0 μm, preferably from 0.3 to 3 μm and in particular from 0.3 to 2.5 μm.

8. The polyester film as claimed in one or more of claims 1 to 7, wherein the UV absorber and/or the flame retardant is present in the base layer and/or in the outer layers.

9. The polyester film as claimed in one or more of claims 1 to 8, wherein the flame retardants used comprise organophosphorus compounds or mixtures of organophosphorus compounds, and the UV absorbers used comprise 2-hydroxybenzotriazoles or triazines or mixtures of these UV absorbers.

10. The polyester film as claimed in one or more of claims 1 to 9, wherein the UV absorbers used comprise 2-(4,6-diphenyl-1,3,5-triazin-2-yl)-5-hexyloxyphenol or 2,2'-methylenebis-6-(2H-benzotriazol-2-yl)-4-(1,1,2,2-tetramethylpropyl)phenol or mixtures of these UV absorbers, if desired with other UV absorbers.

**11.** The polyester film as claimed in one or more of claims 1 to 10, wherein the concentration of the UV absorber(s) is from 0.01 to 5 % by weight, based on the weight of the layers in which they are present.

**12.** The polyester film as claimed in one or more of claims 1 to 11, wherein the flame retardant is soluble in the thermoplastic polyester in which it is present.

**13.** The polyester film as claimed in one or more of claims 1 to 12, wherein the flame retardants used comprise dimethyl methylphosphonate or mixtures of organophosphorus compounds.

**14.** The polyester film as claimed in one or more of claims 1 to 13, wherein the concentration of the flame retardant(s) is from 0.5 to 30 % by weight, preferably from 1 to 20 % by weight, based on the weight of the layers in which they are present.

**15.** The polyester film as claimed in one or more of claims 1 to 14, wherein at least one hydrolysis stabilizer is present.

**16.** The polyester film as claimed in one or more of claims 1 to 15, wherein the concentration of the hydrolysis stabilizer (s) is from 0.1 to 1 % by weight, based on the weight of the layers in which they are present.

**17.** A process for producing a polyester film as claimed in one or more of claims 1 to 16, which comprises coextruding, via a coextrusion die, the starting materials required for producing the base and outer layers, and, if desired, intermediate layers, and biaxially orienting, heat-setting and, if desired, coating the resultant film.

**18.** The process as claimed in claim 17, wherein the flame retardant and/or the UV absorber and, if desired, the hydrolysis stabilizer are added by way of masterbatch technology.

**19.** The use of a polyester film as claimed in one or more of claims 1 to 16, for example for interior decoration, for constructing exhibition stands or for exhibition requisites, as displays, for placards, for protective glazing of machines or of vehicles, in the lighting sector, in the fitting out of shops or of stores, or as a promotional requisite or a laminating medium.

## Revendications

**1.** Film de polyester orienté biaxialement, qui comporte une couche de base B à base de poly(éthylène-téréphtalate) et une couche de recouvrement A soudable et une couche de recouvrement C non soudable se trouvant sur l'autre face de la couche de base, et éventuellement d'autres couches intermédiaires, les couches de recouvrement A et C contenant au moins un agent anti-adhérence de contact, et qui contient au moins un absorbeur UV et au moins un agent ignifuge et dans lequel on utilise en tant que polyester pour la couche de recouvrement A un copolyester qui est essentiellement constitué de motifs acide isophtalique, acide téréphtalique et éthylèneglycol et dans lequel la couche de recouvrement A présente une température de début de soudage de <110 °C et la concentration d'agent anti-adhérence de contact va de 0 à 0,15 % en poids dans la couche de base B, de 0,1 à 1 % en poids dans la couche de recouvrement C et de 0,01 à 0,2 % en poids dans la couche de recouvrement A et le diamètre moyen de particule de l'agent anti-adhérence de contact est inférieur à 100 nm et supérieur à 1 μm.

**2.** Film de polyester selon la revendication 1, **caractérisé en ce qu'**il présente une structure de couches A-B-C.

**3.** Film de polyester selon une ou plusieurs des revendications 1 ou 2, **caractérisé en ce que** le copolyester de la couche de recouvrement A consiste à raison de 40-95 % en moles, de préférence de 50-95 % en moles, en particulier de 60-85 % en moles en motifs éthylène-téréphtalate et le reste à 100 % en moles consiste en motifs éthylène-isophtalate.

**4.** Polyester selon une ou plusieurs des revendications 1 à 3, **caractérisé en ce que** la couche de base ne contient pas d'agent anti-adhérence de contact ou la concentration d'agent anti-adhérence de contact dans la couche de base B est plus faible que dans les couches de recouvrement A et C.

**5.** Polyester selon une ou plusieurs des revendications 1 à 4, **caractérisé en ce que** la concentration d'agent anti-adhérence de contact dans la couche de recouvrement C non soudable est plus forte que dans la couche de recouvrement A soudable.

**6.** Film de polyester selon une ou plusieurs des revendications 1 à 5, **caractérisé en ce qu'**on utilise $SiO_2$ comme agent anti-adhérence de contact.

**7.** Film de polyester selon une ou plusieurs des revendications 1 à 6, **caractérisé en ce que** l'épaisseur des couches de recouvrement est identique ou différente et va de 0,2 à 4,0 μm, de préférence de 0,3 à 3 μm et en particulier de 0,3 à 2,5 μm.

**8.** Film de polyester selon une ou plusieurs des revendications 1 à 7, **caractérisé en ce que** l'absorbeur UV et/ou l'agent ignifuge est/sont contenu(s) dans la couche de base et/ou dans les couches de recouvrement.

**9.** Film de polyester selon une ou plusieurs des revendications 1 à 8, **caractérisé en ce qu'**on utilise comme agent ignifuge des composés phosphorés organiques ou des mélanges de composés phosphorés organiques et comme absorbeur UV des 2-hydroxybenzotriazoles ou des triazines ou des mélanges de ces absorbeurs UV.

**10.** Film de polyester selon une ou plusieurs des revendications 1 à 9, **caractérisé en ce qu'**on utilise comme absorbeur UV du 2-(4,6-diphényl-1,3,5-triazin-2-yl)-5-(hexyl)oxyphénol ou du 2,2'-méthylène-bis-6-(2H-benzotriazol-2-yl)-4-(1,1,2,2-tétraméthylpropyl)phénol ou des mélanges de ces absorbeurs UV, éventuellement avec d'autres absorbeurs UV.

**11.** Film de polyester selon une ou plusieurs des revendications 1 à 10, **caractérisé en ce que** la concentration de l'absorbeur UV ou des absorbeurs UV va de 0,01 à 5 % en poids, par rapport au poids des couches le(s) contenant.

**12.** Film de polyester selon une ou plusieurs des revendications 1 à 11, **caractérisé en ce que** l'agent ignifuge est soluble dans le polyester thermoplastique le contenant.

**13.** Film de polyester selon une ou plusieurs des revendications 1 à 12, **caractérisé en ce qu'**on utilise comme agent ignifuge du méthylphosphonate de diméthyle ou des mélanges de composés phosphorés organiques.

**14.** Film de polyester selon une ou plusieurs des revendications 1 à 13, **caractérisé en ce que** la concentration de l'agent ignifuge ou des agents ignifuges va de 0,5 à 30 % en poids, de préférence de 1 à 20 % en poids, par rapport au poids des couches le(s) contenant.

**15.** Film de polyester selon une ou plusieurs des revendications 1 à 14, **caractérisé en ce qu'**il contient au moins un stabilisant vis-à-vis de l'hydrolyse.

**16.** Film de polyester selon une ou plusieurs des revendications 1 à 15, **caractérisé en ce que** la concentration du stabilisant vis-à-vis de l'hydrolyse ou des stabilisants vis-à-vis de l'hydrolyse va de 0,1 à 1 % en poids, par rapport au poids des couches le(s) contenant.

**17.** Procédé pour la fabrication d'un film de polyester selon une ou plusieurs des revendications 1 à 16, **caractérisé en ce que** les produits de départ requis pour la production des couches de base et de recouvrement et éventuellement des couches intermédiaires sont coextrudés au moyen d'une extrudeuse à travers une filière multicouche et le film obtenu est étiré biaxialement et thermofixé et éventuellement revêtu.

**18.** Procédé selon la revendication 17, **caractérisé en ce que** l'agent ignifuge et/ou l'absorbeur UV et éventuellement le stabilisant vis-à-vis de l'hydrolyse est/sont ajouté(s) au moyen de la technique de mélange-maître.

**19.** Utilisation d'un film de polyester selon une ou plusieurs des revendications 1 à 16 par exemple pour des habillages intérieurs, pour le montage d'expositions et pour des articles d'exposition, comme afficheurs, pour des écriteaux, pour des vitrages protecteurs de machines et de véhicules, dans le secteur de l'éclairage, dans la construction de magasins et de rayonnages, comme article publicitaire, milieu de contre-collage.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- GB 1465973 A
- EP 0035835 A
- EP 0432886 A
- EP 0515096 A
- WO 9806575 A
- DE 2346787 A
- EP 0006686 A
- EP 0031202 A
- EP 0031203 A
- EP 0076582 A

### In der Beschreibung aufgeführte Nicht-Patentliteratur

- Polyester Films. **W. EBERHARD ; S. JANOCHA ; M.J. HOPPER ; K. J. MACKENZIE.** Encyclopaedia of polymer science & engineering. 1988, vol. 12, 193-216
- **H. DAY ; D. M. WILES.** *J. Appl. Polym. Sci,* 1972, vol. 16, 203